(19) Europäisches Patentamt
European Patent Office
Office européen des brevets

(11) Veröffentlichungsnummer: **0 276 666 A2**

# (12) EUROPÄISCHE PATENTANMELDUNG

(21) Anmeldenummer: **88100237.2**

(22) Anmeldetag: **11.01.88**

(51) Int. Cl.[4]: **A01N 55/04** , A01N 47/44 , A01N 47/38 , A01N 47/18 , A01N 47/14 , A01N 47/04 , A01N 43/90 , A01N 43/68 , //(A01N55/04,43:653), (A01N47/44,43:653), (A01N47/38,43:653), (A01N47/18,43:653), (A01N47/14,43:653), (A01N47/04,43:653), (A01N43/90,43:653), (A01N43/68,43:653)

(30) Priorität: **22.01.87 DE 3701715**

(43) Veröffentlichungstag der Anmeldung: **03.08.88 Patentblatt 88/31**

(84) Benannte Vertragsstaaten: **AT BE CH DE ES FR GB GR IT LI NL**

(71) Anmelder: **BAYER AG**
**Konzernverwaltung RP Patentabteilung**
**D-5090 Leverkusen 1 Bayerwerk(DE)**

(72) Erfinder: **Brandes, Wilhelm, Dr.**
**Eichendorffstrasse 3**
**D-5653 Leichlingen(DE)**
Erfinder: **Reinecke, Paul, Dr.**
**Steinstrasse 8**
**D-5090 Leverkusen 3(DE)**
Erfinder: **Kaspers, Helmut, Dr. Prof.**
**Steglitzer Strasse 4**
**D-5090 Leverkusen 1(DE)**
Erfinder: **Scheinpflug, Hans, Dr.**
**Am Thelenhof 15**
**D-5090 Leverkusen 1(DE)**
Erfinder: **Stetter, Jörg, Dr.**
**Gellertweg 4**
**D-5600 Wuppertal 1(DE)**

(54) **Fungizide Wirkstoffkombinationen.**

(57) Die neuen Wirkstoffkombinationen aus 3,3-Dimethyl-1-(4-methoximinomethylphenoxy)-1-(1,2,4-triazol-1-yl)-butan-2-ol der Formel

EP 0 276 666 A2

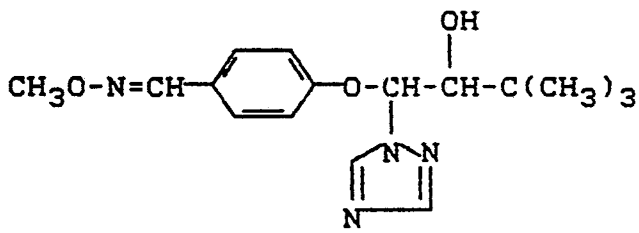

(I)

und anderen fungiziden Wirkstoffen sind sehr gut zur Bekämpfung von Pilzen geeignet.

## Fungizide Wirkstoffkombinationen

Die vorliegende Anmeldung betrifft neue Wirkstoffkombinationen, die aus dem bekannten 3,3-Diemethyl-1-(4-methoximinomethylphenoxy)-1-(1,2,4-triazol-1-yl)-butan-2-ol einerseits und weiteren bekannten fungiziden Wirkstoffen anderersits bestehen und sehr gut zur Bekämpfung von phytopathogenen Pilzen geeignet sind.

Es ist bereits bekannt, daß 3,3-Dimethyl-1-(4-methoximinomethyl-phenoxy)-1-(1,2,4-triazol-1-yl)-butan-2-ol fungizide Potenz besitzt (vgl. EP-OS 0 076 370). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, Morpholin-Verbindungen und Polyhalogenalkylthio-Derivate zur Bekämpfung von Pilzen eingesetzt werden können (vgl. K.H. Büchel "Pflanzenschutz und Schädlingsbekämpfung" Seiten 140, 141 und 146 bis 153, Georg Thieme Verlag, Stuttgart (1977). Die Wirkung der betreffenden Stoffe ist aber bei niedrigen Aufwandmengen nicht immer befriedigend.

Es wurde nun gefunden, daß die neuen Wirkstoffkombinationen aus 3,3-Diemthyl-1-(4-methoxyiminomethylphenoxy)-1-(1,2,4-triazol-1-yl)-butan-2-ol der Formel

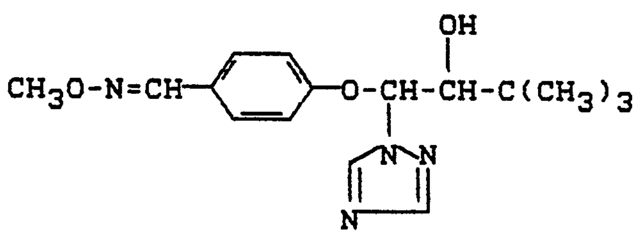

(I)

und

(A) Polyhalogenalkylthio-Derivaten der Formel

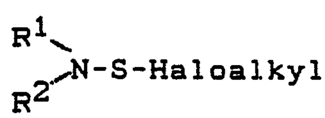

(II)

(IIa) $R^1 = (CH_3)_2N\text{-}SO_2\text{-}$,

$R^2$ = 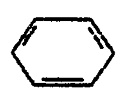 , Haloalkyl = $-CCl_2F$

(DICHLOFLUANID)

(IIb) $R^1 = (CH_3)_2N\text{-}SO_2\text{-}$, $R^2$ = 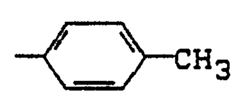

Halogenalkyl = $-CCl_2F$
(TOLYLFLUANID)

(IIc) $R^1$ zusammen mit $R^2$ = 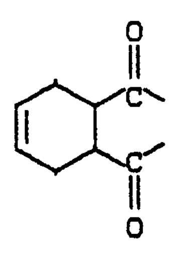

Halogenalkyl = $-CCl_3$
(CAPTAN)

und/oder

(B) einem Guanidin-Derivat der Formel

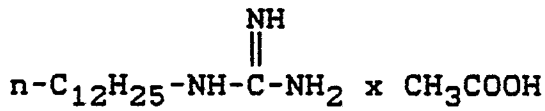

(III)

(DODINE)

und/oder

(C) Dithiocarbamaten der Formel

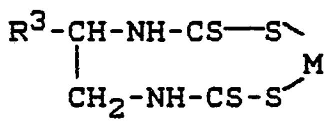

(IV)

(IVa) $R^3$ = H, M = Zn (ZINEB)
(IVb) $R^3$ = H, M = Mn (MANEB)
(IVc) Mischung aus (IVa) und (IVb) (MANCOZEB)
(IVd) $R^3$ = $CH_3$, M = Zn (PROPINEB)
(IVe) Tris-[amin-zink-ethylen-bis-(dithiocarbamat)-polyethylen-bis-(thiuram-disulfid)] (METIRAM-D)

und/oder

(D) Benzimidazol-Derivaten der Formel

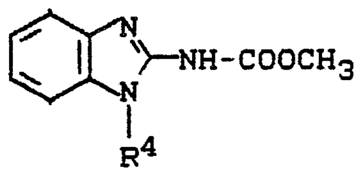

(V)

(Va) $R^4$ = H (CARBENDAZIM)
(Vb) $R^4$ = $-CO-NH-C_4H_9$ (BENOMYL)

und/oder

(E) einem Triazin-Derivat der Formel

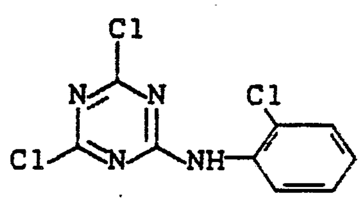

(VI)

(ANILAZIN)

und/oder

(F) einem Chinoxalin-Derivat der Formel

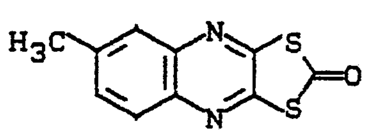

(VII)

(CHINOMETHIONAT)

und/oder
(G) einer organischen Zinn-Verbindung der Formel

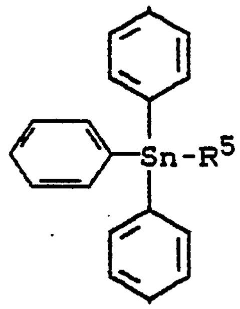

(VIII)

(VIIIa) $R^5$ = $-O-CO-CH_3$
(VIIIb) $R^5$ = -OH
sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer echter synergistischer Effekt vor und nicht nur eine Wirkungsergänzung.

Bevorzugte erfindungsgemäße Wirkstoffkombinationen sind Mischungen, die den Wirkstoff der Formel (I) und Verbindungen der Formeln (II), (III), (IVc), (IVd), (IVe), (V), (VI) oder (VIII) enthalten.

Besonders bevorzugte erfindungsgemäße Wirkstoffkombinationen sind Mischungen, die den Wirkstoff der Formel (I) und
- Dichlofluanid der Formel (IIa) oder
- Tolylfluanid der Formel (IIb) oder
- Dodine der Formel (III) oder
- Mancozeb der Formel (IVc) oder
- Propineb der Formel (IVd) oder
- Metiram D der Formel (IVe) oder
- Carbendazim der Formel (Va) oder
- Benomyl der Formel (Vb) oder
- Anilazin der Formel (VI)

enthalten.

Aus der Strukturformel für den Wirkstoff der Formel (I) ist ersichtlich, daß die Verbindung zwei asymmetrisch substituierte Kohlenstoffatome aufweist. Ferner kann die Oximether-Gruppe in einer syn-oder anti-Form vorliegen. Das Produkt kann daher als Gemisch von verschiedenen Isomeren oder auch in Form einer einzigen Komponente vorliegen. Der Wirkstoff der Formel (I) ist bekannt (vgl. EP-OS 0 076 370).

Die in den erfindungsgemäßen Kombinationen außerdem vorhandenen fungiziden Wirkstoffe sind ebenfalls bekannt. Im einzelnen werden die Wirkstoffe in folgenden Publikationen beschrieben:

(A): R. Wegler, "Chemie der Pflanzenschutz-und Schädlingsbekämpfungsmittel", Band 2, Seiten 95 und 108 bis 110, Springer-Verlag, Berlin/Heidelberg, New York, 1970;

(B): R. Wegler, Loc.cit., Seite 70;

(C): R. Wegler, loc.cit., Seiten 65 und 66; und K.H. Büchel, "Pflanzenschutz und Schädlingsbekämpfung", Seiten 136 und 137, Georg Thieme Verlag, Stuttgart 1977;

(D): DE-AS 1 209 799, DE-OS 1 932 297, US-PS 3 010 968 und K.H. Büchel, loc.cit., Seite 152;

(E): R. Wegler, loc. cit., Seite 120;

(F): R. Wegler, loc. cit., Seite 128 und

(G): K.H. Büchel, loc. cit., Seite 125.

Die erfindungsgemäßen Wirkstoffkombinationen enthalten neben dem Wirkstoff der Formel (I) mindestens einen Wirkstoff von den Verbindungen der Gruppen (A) bis (G). Sie können darüber hinaus auch weitere fungizid wirksame Zumischkomponenten enthalten.

Wenn die Wirkstoffe in den erfindungemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
- 0,5 bis 100 Gewichtsteile, vorzugsweise
2 bis 20 Gewichtsteile an Wirkstoff aus der Gruppe (A),
- 0,5 bis 50 Gewichtsteile, vorzugsweise

2 bis 20 Gewichtsteile an Wirkstoff aus der Gruppe (B),
- 0,5 bis 100 Gewichtsteile, vorzugsweise
5 bis 100 Gewichtsteile an Wirkstoff aus der Gruppe (C),
- 0,5 bis 20 Gewichtsteile, vorzugsweise
0,5 bis 10 Gewichtsteile an Wirkstoff aus der Gruppe (D),
- 1 bis 100 Gewichtsteile, vorzugsweise
5 bis 50 Gewichtsteile an Wirkstoff aus der Gruppe (E),
- 0,5 bis 20 Gewichtsteile, vorzugsweise
0,5 bis 10 Gewichtsteile an Wirkstoff aus der Gruppe (F) und
- 1 bis 100 Gewichtsteile, vorzugsweise
2 bis 50 Gewichtsteile an Wirkstoff aus der Gruppe (G).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes u.s.w. einsetzen.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besondere praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht-und Samenkrankheiten, die insbesondere durch Tilletia-Urocystis-, Ustilago-, Septoria-, Typhula-, Rhynchosporium-, Helminthosporium-, Fusarium-und Gibberella-Arten hervorgerufen werden. Durch die systemische Wirkung des einen Mischungspartners werden die Pflanzen auch oft längere Zeit nach der Beizung noch vor Krankheitserregern geschützt, die verschiedene Teile des Sprosses angreifen können, z.B. echte Mehltaupilze und Rostpilze. Die Wirkstoffkombinationen können daneben auch als Bodenbehandlungsmittel gegen phytophatogene Pilze eingesetzt werden und wirken gegen Wurzelfäulen und Tracheomykosen, die z.B. durch Krankheitserreger der Gattungen Pythium, Verticillium, Phialophora, Rhizoctonia, Fusarium, Gibberella und Thielaviopsis verursacht werden.

Die erfindugnsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie Oomycetes (Phytophthora-, Plasmopora-und Peronospora-Arten), echte Mehltaupilze (Erysiphe-, Uncinula-, Sphaerotheca-, Podosphaera-Arten, Leveillula taurica), Rostpilze, Venturia-Arten, Mycosphaerella-Arten, Cercospora-Arten, Alternaria-Arten, Botrytis-Arten, Fusarium-Arten, Pyrenophora-Arten, Cochliobolus-Arten, Septoria-Arten, Pseudocercosporella herpotrichoides, Pyricularia oryzae, Pellicularia sasakii.

Die erfindungemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem

Material wie Sägemehl, Kokosnußschalen, Maiskolben und Tabakstengel. Als Emulgier-und/oder -schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsufonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. eisenoxid, Titanoxid, Ferrocyanblau und organische Farbstoffe, wie Alizarin-, Azo-und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gw.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebenene Kombination zweier Wirkstoffe kann (vgl. Colby, S.R., "Calculating synergistic und antagonistic responses of herbicide combinations", Weeds <u>15</u>, Seiten 20-22, 1967) wie folgt berechnet werden:

Wenn

X den Krankheitsbefall, ausgedrückt in % der unbehandelten Kontrolle, beim Einsatz des Wirkstoffes A in einer Konzentration von $\underline{m}$ ppm,

Y den Krankheitsbefall, ausgedrückt in % der unbehandelten Kontrolle, beim Einsatz des Wirkstoffes B in einer Konzentration von $\underline{n}$ ppm und

E den erwarteten Krankheitsbefall, ausgedrückt in % der unbehandelten Kontrolle, beim Einsatz der Wirkstoffe A und B in Konzentrationen von $\underline{m}$ und $\underline{n}$ ppm bedeutet,

dann ist

$$E = \frac{X \cdot Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Befall geringer sein als der aus der oben angeführten Formel errechnete Wert für den erwarteten Befall (E).

Aus den Tabellen der folgenden Beispiele geht eindeutig hervor, daß die gefundene Wirkung der erfindungsegmäßen Wirkstoffkombinationen größer ist als die berechnete, d.h., daß ein synergistischer Effekt vorliegt.

<u>Beispiel A</u>

Venturia-Test (Apfel) / protektiv

Lösungsmittel: 4,7 Gewichtsteile Aceton
Emulgator: 0,3 Gewichtsteile Alkyl-aryl-polyglykolether

Zur Herstellung einer zweckmäßigen Wirkstoffzubereitung wird entweder
- 1 Gewichtsteil Wirkstoff oder Wirkstoffkombination mit den angegebenen Mengen an Lösungsmittel und Emulgator vermischt und das Konzentrat mit Wasser auf die gewünschte Konzentration verdünnt oder
- ein handelsübliches Konzentrat an Wirkstoff oder Wirkstoffkombination mit Wasser auf die jeweils gewünschte Konzentration verdünnt.

Zur Prüfung auf protektive Wirksamkeit bespritzt man junge Pflanzen mit der jeweiligen Wirkstoffzubereitung (einzelne Wirkstoffe oder Wirkstoffkombinationen) bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20°C und 100 % relativer Luftfeuchtigkeit in einer Inkubationskabine.

Die Pflanzen werden dann im Gewächshaus bei 20°C und einer relativen Luftfeuchtigkeit von ca. 70 % aufgestellt.

12 Tage nach der Inokulation erfolgt die Auswertung.

Wirkstoffe, Wirkstoffkonzentrationen und Versuchsergebnisse gehen aus den folgenden Tabellen hervor.

**Tabelle A-1:**

Venturia-Test (Apfel) / protektiv

| Wirkstoffe | Wirkstoffkonzentration in der Spritzbrühe in ppm | Krankheitsbefall in % der unbehandelten Kontrolle | |
|---|---|---|---|
| - (Kontrolle) | - | = 100 | |
| (I) | 0,05 | 63 | |
| Diastereomerengemisch (IVc) | 0,85 | 68 | |
| | | gefunden | berechnet*) |
| (I) Diastereomerengemisch + (IVc) | 0,05 + 0,85 | 15 | 43 |

*) Berechnet nach der auf der Seite 14 angegebenen Formel.

Tabelle A-2:

Venturia-Test (Apfel) / protektiv

| Wirkstoffe | Wirkstoffkonzentration in der Spritzbrühe in ppm | Krankheitsbefall in % der unbehandelten Kontrolle | |
|---|---|---|---|
| - (Kontrolle) | - | 80 | |
| (I) | 0,125 | 65 | |
| Diastereomerengemisch (IIa) | 1,25 | 61 | |
| | | gefunden | berechnet*) |
| (I) Diastereomerengemisch + (IIa) | 0,125 + 1,25 | 12,5 | 40 |

*) Berechnet nach der auf der Seite 14 angegebenen Formel.

Beispiel B

Botrytis-Test (Bohne) / protektiv

Lösungsmittel: 4,7 Gewichsteile Aceton
Emulgator: 0,3 Gewichtsteile Alkyl-aryl-polyglykolether

Zur Herstellung einer zweckmäßigen Wirkstoffzubereitung wird entweder
- 1 Gewichtsteil Wirkstoff oder Wirkstoffkombination mit den angegebenen Mengen an Lösungsmittel und Emulgator vermischt und das Konzentrat mit Wasser auf die gewünschte Konzentration verdünnt oder
- ein handelsübliches Konzentrat an Wirkstoff oder Wirkstoffkombination mit Wasser auf die jeweils gewünschte Konzentration verdünnt.

Zur Prüfung auf protektive Wirksamkeit bespritzt man junge Pflanzen mit der jeweiligen Wirkstoffzubereitung (einzelne Wirkstoffe oder Wirkstoffkombinationen) bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt. 3 Tage nach der Inokulation wird die Größe der Befallsflecken auf den Blättern ausgewertet.

Wirkstoffe, Wirkstoffkonzentrationen und Versuchsergebnisse gehen aus der folgenden Tabelle hervor.

Tabelle B:

Botrytis-Test (Bohne) / protektiv

| Wirkstoffe | Wirkstoffkonzentration in der Spritzbrühe in ppm | Krankheitsbefall in % der unbehandelten Kontrolle | |
|---|---|---|---|
| - (Kontrolle) | - | = 100 | |
| (I) Diastereomerengemisch | 100 | 72 | |
| (IIa) | 5 | 64 | |
| | | gefunden | berechnet*) |
| (I) Diastereomerengemisch + (IIa) | 100 + 5 | 38 | 46 |

*) Berechnet nach der auf der Seite 14 angegebenen Formel.

**Ansprüche**

1. Fungizide Mittel, gekennzeichnet durch einen Gehalt an einer Wirkstoffkombination bestehend aus 3,3-Dimethyl-1-(4-methoximinomethylphenoxy)-1-(1,2,4-triazol-1-yl)-butan-2-ol der Formel

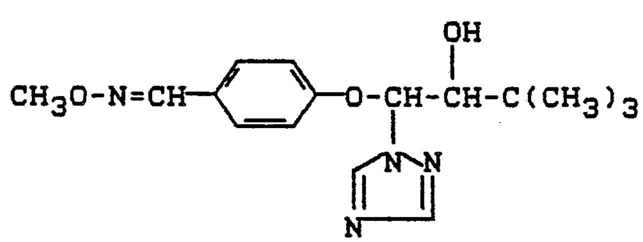

(I)

und

(A) Polyhalogenalkylthio-Derivaten der Formeln

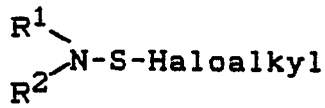 (II)

(IIa) $R^1$ = $(CH_3)_2N-SO_2-$,

$R^2$ = 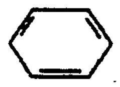 , Haloalkyl = $-CCl_2F$

(DICHLOFLUANID)

(IIb) $R^1$ = $(CH_3)_2N-SO_2-$, $R^2$ = 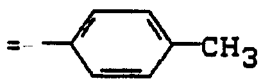

Halogenalkyl = $-CCl_2F$
(TOLYLFLUANID)

(IIc) $R^1$ zusammen mit $R^2$ = 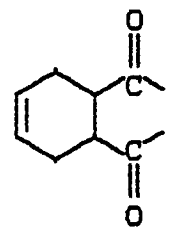

Halogenalkyl = $-CCl_3$
(CAPTAN)

und/oder
(B) einem Guanidin-Derivat der Formel

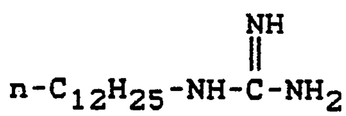 x $CH_3COOH$ (III)

(DODINE)

und/oder
(C) Dithiocarbamaten der Formel

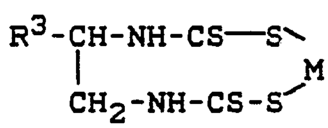 (IV)

(IVa) $R^3$ = H, M = Zn (ZINEB)
(IVb) $R^3$ = H, M = Mn (MANEB)
(IVc) Mischung aus (IVa) und (IVb) (MANCOZEB)
(IVd) $R^3$ = $CH_3$ = $CH_3$, M = Zn (PROPINEB)
(IVe) Tris-[amin = zink-ethylen-bis-(dithiocarbamat)-polyethylen-bis-(thiuram-disulfid)] (METIRAM-D)
und/oder
(D) Benzimidazol-Derivaten der Formel

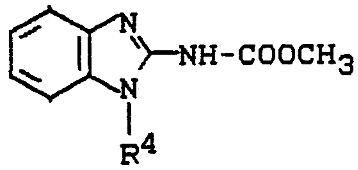

(V)

(Va) $R^4$ = H (CARBENDAZIM)
(Vb) $R^4$ = $-CO-NH-C_4H_9$ (BENOMYL)
und/oder
(E) einem Triazin-Derivat der Formel

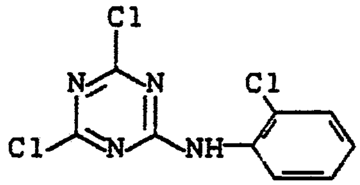

(VI)

(ANILAZIN)

und/oder
(F) einem Chinoxalin-Derivat der Formel

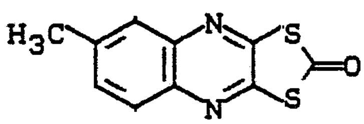

(VII)

(CHINOMETHIONAT)

und/oder
(G) einer organischen Zinn-Verbindung der Formel

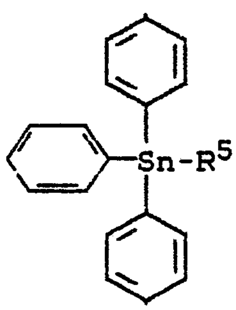

(VIII)

(VIIIa) $R^5$ = $-O-CO-CH_3$
(VIIIb) $R^5$ = -OH.

2. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

3. Verwendung von Wirkstoffkombinationen gemäß Anspruch 1 zur Bekämpfung von Pilzen.

4. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.